**Europäisches Patentamt**

**European Patent Office**

**Office européen des brevets**

(19)

(11) Veröffentlichungsnummer: **0 441 355 A1**

## (12) EUROPÄISCHE PATENTANMELDUNG

(21) Anmeldenummer: 91101623.6

(22) Anmeldetag: 06.02.91

(51) Int. Cl.5: **C23F 15/00**, C02F 1/72, C02F 1/20

(30) Priorität: 07.02.90 DE 4003694

(43) Veröffentlichungstag der Anmeldung:
14.08.91 Patentblatt 91/33

(84) Benannte Vertragsstaaten:
**AT CH DE FR GB LI NL**

(71) Anmelder: **Linde Aktiengesellschaft**
**Abraham-Lincoln-Strasse 21**
**W-6200 Wiesbaden(DE)**

(72) Erfinder: **Matt, Konrad, Dr. Dipl.-Chem.**
**Leonrodstrasse 12**
**W-8000 München(DE)**

(74) Vertreter: **Schaefer, Gerhard, Dr.**
**Linde Aktiengesellschaft Zentrale**
**Patentabteilung**
**W-8023 Höllriegelskreuth(DE)**

(54) Verfahren und Vorrichtung zur Entfernung von Wasserstoff aus Wasserkreisläufen.

(57) Die Erfindung betrifft ein Verfahren und eine Vorrichtung zur Entfernung von gelöstem Wasserstoff aus Wasserkreisläufen, wie z.B. Kühlwasseroder Heizwasserkreisläufen. Es wird vorgeschlagen, das gelöste Wasserstoff enthaltende Wasser durch mindestens ein Festbettfilter zu leiten, das ein Adsorptionsmaterial, bevorzugt palladiumhaltiges Material, aufweist. Zweckmäßigerweise werden zwei Festbettfilter I,II parallel geschaltet, die wechselweise betrieben werden. Während das eine Festbettfilter II aktiv ist, wird das andere Festbettfilter I durch Zugabe von sauerstoffangereichertem Spülwasser über Leitung 6 regeneriert.

EP 0 441 355 A1

# VERFAHREN UND VORRICHTUNG ZUR ENTFERNUNG VON WASSERSTOFF AUS WASSERKREISLÄUFEN

Die Erfindung betrifft ein Verfahren zur Entfemung von gelöstem Wasserstoff aus Wasserkreisläufen sowie eine Vorrichtung zur Durchführung des Verfahrens.

Bei der Aufbereitung von Wässern für Kraftwerke, kommunale und industrielle Heizanlagen sowie Heißdampfsysteme spielt neben der Entsalzung die Entgasung eine herausragende Rolle. Die primäre Entgasung des eingespeisten Wassers dient vor allem der Entfernung von eingeschlepptem Sauerstoff, der bei hohen Temperaturen die Spannungsrißkorrosion im System fördert. Die Entfernung von Kohlendioxid hebt den pH und verhindert Verkalkung.

Da die meisten Heißwasser- und Dampfsysteme jedoch im Kreislauf betrieben werden, ist im Betrieb auch mit einer Bildung von Wasserstoff in kleinen Mengen aufgrund von Korrosionsprozessen im System zu rechnen. Dieser Wasserstoff muß aus dem System entfernt werden, da er zu Materialversprödung führt.

Derzeit besteht die einfachste Lösung zur Entfernung gelösten Wasserstoffs aus Korrosionsprozessen in einem Austausch der gesamten im Kreislauf befindlichen Wassermenge gegen frisch aufbereitetes Wasser. Dies ist wegen des beträchtlichen Aufwands und des zeitwelig nicht zu umgehenden Anlagenstillstands in der Regel nur in Einzelfällen und vor allem bei Kleinanlagen praktikabel.

Eine zweite Methode besteht in der Zudosierung von Sauerstoff in den Brauchwasserkreislauf. Die einzustellenden Sauerstoffkonzentrationen liegen in der Regel zwischen 100 und 1000 ppb. Der Sauerstoff reagiert mit dem im System befindlichen Wasserstoff unter undefinierten Bedingungen an katalytisch aktiven Oberflächen, heißen Anlagenteilen und ähnlichem zu Wasser ab. Da eine Sauerstoffüberdosierung - wie oben erwähnt, ebenfalls aus Korrosionsschutzgründenunbedingt vermieden werden muß, ist eine aufwendige Meß- und Regeleinrichtung zur präzisen Sauerstoffdosierung erforderlich. Insbesondere müssen dabei zur Verhinderung von Schäden an der Anlage Sauerstoff- und Wasserstoffkonzentration im ppb-Bereich gehalten werden.

Der vorliegenden Erfindung liegt daher die Aufgabe zugrunde, ein Verfahren der eingangs genannten Art sowie eine Vorrichtung zur Durchführung des Verfahrens so auszugestalten, daß der Wasserstoff zuverlässig unter kontrollierten Reaktionsbedingungen auf einen minimalen Restwert entfert wird und keine Gefahr von Sauerstoffüberdosierung entsteht.

Diese Aufgabe wird erfindungsgemäß dadurch gelöst, daß das den gelösten Wasserstoff enthaltende Wasser durch mindestens ein Festbettfilter geleitet wird, das ein Adsorptionsmaterial für Wasserstoff aufweist.

Das Verfahren basiert auf der Fähigkeit gewisser Metalle, Wasserstoff in ihrem Kristallgitter aufzunehmen, zu speichem und ihn schon bei Raumtemperatur mit Oxidationsmitteln, wie z.B. in Wasser gelöstem Sauerstoff, zur Reaktion zu bringen. Einige Beispiele für solche Metalle sind Platin, Kobaldt, Nickel, Eisen, Kupfer und vor allem Palladium. Die Metalle werden in der chemischen Technik in der Regel als dünne Schichten auf geeigneten Trägermaterialien, wie z.B. Aluminiumoxidkeramik, Aktivkohle oder Polymerperlen abgeschieden bzw. durch Bedampfung aufgebracht.

Der Erfindung liegt die Erkenntnis zugrunde daß derartige im ursprünglichen Zustand wasserstofffreie Adsorptionsmaterialien als Wasserstoffalle auch für kleine Mengen Wasserstoff eingesetzt werden können.

Das Adsorptionsmaterial belädt sich theoretisch bis zur Sättigung mit Wasserstoff. In der Praxis wird man den sättigungsnahen Bereich wegen der naturgemäß stark nachlassenden Eliminierungsleistung nicht nutzen, sondern die Beladung noch im annähern linearen Bereich der Beladungskurve beenden. Zur Regeneration wird über das wasserstoffgesättigte Adsorptionsmaterial sauerstoffangereichertes Wasser geleitet, wobei der gebundene Wasserstoff zu Wasser abreagiert. Nach der Regeneration ist das Adsorptionsmaterial wieder zur Aufnahme von Wasserstoff bereit.

In der Praxis ordnet man das Adsorptionsmaterial in Festbettfiltern an, die vertikal vom zu behandelnden Wasser durchströmt werden. Zweckmäßigerweise ordnet man zwei oder mehr solcher Filter parallel an, die wechselweise betrieben werden. Jedes Festbettfilter wird solange von einem gelösten Wasserstoff enthaltenden Wasserstrom durchströmt, bis ein zuvor festgelegter Bruchteil der Wasserstoffsättigung des Adsorptionsmaterials erreicht ist. Danach wird der Wasserstrom auf eines der weiteren Festbettfilter umgeleitet und das vorige Festbettfilter mit sauerstoffangereichertem Spülwasser gespült.

Die Filtergröße muß so bemessen werden, daß auch unter ungüstigsten Bedingungen die Spülzeit kürzer ist als die Standzeit des laufenden Filters. Dies kann durch eine Erhöhung der Anzahl parallel betriebener Filter, aber auch durch Optimierung der Spülbedingungen, hier also des Angebots an Sauerstoff zur Regeneration, erreicht werden.

Eine besonders effektive Möglichkeit den für die Regeneration erforderlichen hohen Sauerstoffpartialdruck einzustellen, ist die Zudosierung von technisch reinem Sauerstoff in das Spülwasser, wodurch eine ca. 4,8 mal höhere Sauerstoffkonzentration möglich ist, als bei Luftbegasung. Vorzugsweise wird der Sauerstoff unter Druck in der Wasserphase gelöst.

Der Umschaltpunkt für den Wechsel der Filter kann entweder empirisch über zuvor bestimmte Filterstandzeiten festgelegt werden oder aber anhand einer Wasserstoff-Spurenmessung im ablaufenden aufbereiteten Wasser erfolgen. Die Umschaltung erfolgt dabei - eventuell auch automatisiert über einen Grenzkontakt - bei Erreichen einer vorgewählten Wasserstoff-Maximalkonzentration.

In ähnlicher Weise kann der Spülvorgang durch eine Messung der Sauerstoffkonzentration im Spülwasser (Ansteigen der Sauerstoffkonzentration bei Regenerationsende) überwacht und gegebenenfalls automatisiert werden. Durch eine geeignete Verriegelungsschaltung ist jedoch sicherzustellen, daß niemals gleichzeitig Sauerstoff und Wasserstoff in denselben Wasserkreislauf eingespeist werden können.

Eine Vorrichtung zur Durchführung des Verfahrens besteht aus einem geschlossenen Leitungssystem für gelösten Wasserstoff enthaltendes Wasser. Erfindungsgemäß ist in das Leitungssystem mindestens ein Festbettfilter geschaltet, das ein Adsorptionsmaterial für Wasserstoff aufweist.

Vorzugsweise sind in das Festbettfilter palladiumbelegte Kunstharzperlen eingebaut.

In einer besonders zweckmäßigen Ausführungsform sind mindestens zwei Festbettfilter parallel geschaltet. Das Leitungssystem für das gelösten Wasserstoff enthaltende Wasser ist mittels eines umschaltbaren Stromteiles in je eine Zufuhrleitung für jedes Festbettfilter aufgeteilt. Jedes Festbettfilter weist eine Zufuhrleitung für sauerstoffangereichertes Spülwasser und eine Ableitung auf, die mittels eines umschaltbaren Stromteiles in eine mit dem geschlossenen Leitungssystem in Verbindung stehende Leitung und einen Abzug für verbrauchtes Spülwasser aufgeteilt ist.

Die Erfindung bietet mehrfache Vorteile: Der im Wasserkreislauf gelöste Wasserstoff wird quantitativ unter kontrollierten Reaktionsbedingungen entfernt. Außerdem wird der regelungstechnische Aufwand durch den Wegfall einer aufwendigen Dosiervorrichtung für eine stöchiometrische Zugabe von Sauerstoff, wie sie bei bekannten Verfahren erforderlich ist, wesentlich verringert.

Insbesondere eignet sich die Erfindung zur Behandlung von Kesselspeisewasser oder von Wässern in Heizkreisläufen. Darüber hinaus bietet sich die Erfindung zur Behandlung von Kühlwässern an, z.B. in der Ammoniakherstellung. Aber auch die Entfernung von Wasserstoff aus Prozeßlösungen der chemischen Industrie stellt eine Anwendungsmöglichkeit für die Erfindung dar.

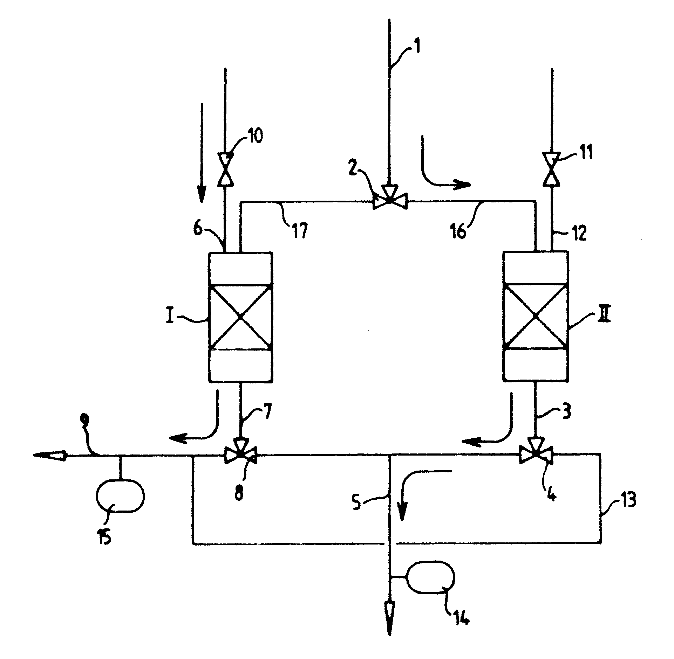

Im folgenden soll die Erfindung anhand eines in der Zeichnung schematisch dargestellten Ausführungsbeispiels naher erläutert werden:

Die Figur zeigt eine Anordnung zur Wasserstoffentfernung aus Brauchwasser mit zwei parallel geschalteten Festbettfiltern.

Das gelösten Wasserstoff enthaltende Brauchwasser, beispielsweise eines Kühl-oder Heizungskreislaufs, wird über Leitung 1 einem umschaltbaren Stromteiler 2 zugeführt, der das Brauchwasser über Leitung 16 dem Festbettfilter II zuleitet. In das Festbettfilter II sind palladiumbelegte Kunstharzperlen mit Durchmessern von ca. 2 mm als Adsorptionsmaterial für den Wasserstoff angeordnet. Das vom Wasserstoff befreite Brauchwasser wird über Leitung 3 abgezogen und einem umschaltbaren Stromteiler 4 zugeführt, der das aufbereitete Brauchwasser über Leitung 5 wieder an den Brauchwasserkreislauf abgibt.

Während das Festbettfilter II aktiv ist, wird das parallel geschaltete identisch aufgebaute Festbettfilter I regeneriert. Hierzu wird sauerstoffangereichertes Spülwasser über ein geöffnetes Ventil 10 in Leitung 6 In das Festbettfilter I eingeleitet. Der im Spülwasser enthaltene Sauerstoff reagiert mit dem im Festbettfilter I gespeicherten Wasserstoff zu Wasser, das über Leitung 7 aus dem Festbettfilter I abgezogen und einem umschaltbaren Stromteiler 8 zugeführt wird. Das verbrauchte Spülwasser wird schließlich über Leitung 9 abgeführt. Der Spülvorgang wird durch eine Messung der Sauerstoffkonzentration im verbrauchten Spülwasser in Leitung 9 mittels eines Meßfühlers 15 überwacht.

Das Festbettfilter II wird bis zu einem zuvor festgelegten Bruchteil der Wasserstoffsättigung des Adsorptionsmaterials mit wasserstoffhaltigem Brauchwasser durchströmt. Anhand einer Wasserstoffspurenmessung mittels eines Meßfühlers 14 in der Ableitung 5 für das aufbereitete Brauchwasser wird die Sättigungskurve des Adsorptionsmaterials kontrolliert.

Bei Erreichen einer vorgewählten Wasserstoff-Maximalkonzentration wird der Stromteiler 2 umgeschaltet, so daß das wasserstoffhaltige Brauchwasser über Leitung 17 dem Festbettfilter I zugeführt wird. Gleichzeitig oder kurz zuvor wird das Ventil 10 geschlossen, so daß die Zufuhr von sauerstoffangereichertem Spülwasser in das Festbettfilter I unterbunden ist. Das wasserstoffhaltige Brauchwasser wird nun vom Festbettfilter I aufbereitet. Das aufbereitete Brauchwasser wird über Leitung 7 abgezogen und dem nun umgeschalteten Stromteiler 8 zugeführt, der das Brauchwasser über Leitung 5 wieder an den Brauchwasserkreislauf abgibt.

Während das Festbettfilter I aktiv ist, wird das Festbettfilter II regeneriert. Hierzu wird sauerstoffangereichertes Spülwasser über ein geöffnetes Ventil 11 In Leitung 12 in das Festbettfilter II eingeleitet. Der im Spülwasser enthaltene Sauerstoff reagiert mit dem Im Festbettfilter II gespeicherten Wasserstoff zu Wasser, das über Leitung 3 aus dem Festbettfilter II abgezogen und dem umgeschalteten Stromteiler 4 zugeführt wird. Das verbrauchte Spülwasser wird schließlich über Leitung 13 und 9 abgeführt.

Bei Erreichen eines zuvor festgelegten Bruchteils der Wasserstoffsättigung des Adsorptionsmaterials im Festbettfilter I wird wieder auf das Festbettfilter II umgeschaltet, und der Reinigungszyklus beginnt wieder von neuem.

## Patentansprüche

1. Verfahren zur Entfernung von gelöstem Wasserstoff aus Wasserkreisläufen, dadurch gekennzeichnet, daß das den gelösten Wasserstoff enthaltende Wasser durch mindestens ein Festbettfilter geleitet wird, das ein Adsorptionsmaterial für Wasserstoff aufweist.

2. Verfahren nach Anspruch 1, dadurch gekennzeichnet, daß als Adsorptionsmaterial palladiumhaltiges Material verwendet wird.

3. Verfahren nach Anspruch 1 oder 2, dadurch gekennzeichnet, daß mindestens zwei parallel geschaltete Festbettfilter wechselweise betrieben werden, wobei jedes Festbettfilter solange von einem gelösten Wasserstoff enthaltenden Wasserstrom durchströmt wird, bis ein zuvor festgelegter Bruchteil der Wasserstoffsättigung des Adsorptionsmaterials erreicht ist, danach der Wasserstrom auf eines der weiteren Festbettfilter umgeleitet wird und das vorige Festbettfilter mit sauerstoffangereichertem Spülwasser gespült wird.

4. Verfahren nach Anspruch 3, dadurch gekennzeichnet, daß dem Spülwasser technisch reiner Sauerstoff zudosiert wird und unter Druck im Spülwasser gelöst wird.

5. Verfahren nach Anspruch 3 oder 4, dadurch gekennzeichnet, daß der gelösten Wasserstoff enthaltende Wasserstrom bei Erreichen einer vorgewählten Wasserstoffmaximalkonzentration im Abfluß des Festbettfilters auf eines der weiteren Festbettfilter umgeleitet wird.

6. Vorrichtung zur Durchführung des Verfahrens nach einem der Ansprüche 1 bis 5 mit einem geschlossenen Leitungssystem für gelösten Wasserstoff enthaltendes Wasser, dadurch gekennzeichnet, daß in das Leitungssystem mindestens ein Festbettfilter (I,II) geschaltet ist, das ein Adsorptionsmittel für Wasserstoff aufweist.

7. Vorrichtung nach Anspruch 6, dadurch gekennzeichnet, daß in das Festbettfilter (I,II) palladiumbelegte Kunstharzperlen eingebaut sind.

8. Vorrichtung nach Anspruch 6 oder 7, dadurch gekennzeichnet, daß mindestens zwei Festbettfilter (I,II) parallel geschaltet sind, wobei das Leitungssystem mittels eines umschaltbaren Stromteiler (2) in je eine Zufuhrleitung (16,17) für jedes Festbettfilter (I,II) aufgeteilt ist und jedes Festbettfilter (I,II) eine Zufuhrleitung (6,12) für sauerstoffangereichertes Spülwasser und eine Ableitung (3,7) aufweist, die mittels eines umschaltbaren Stromteiler (4,8) in eine mit dem geschlossenen Leitungssystem in Verbindung stehende Leitung (5) und einen Abzug (9,13) für verbrauchtes Spülwasser aufgeteilt ist.

**Europäisches Patentamt**

# EUROPÄISCHER RECHERCHENBERICHT

Nummer der Anmeldung

# EP 91 10 1623

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | PATENT ABSTRACTS OF JAPAN, Band 8, Nr. 101 (P-273), 12. Mai 1984; & JP-A-59 013 937 (HITACHI SEISAKUSHO) 24-01-1984 <br> – – – | 1,2,6,7 | C 23 F 15/00 <br> C 02 F 1/72 <br> C 02 F 1/20 |
| Y | PATENT ABSTRACTS OF JAPAN, Band 5, Nr. 49 (C-049), 8. April 1981; & JP-A-56 005 141 (SUMITOMO ELECTRIC IND.) 20-01-1981 <br> – – – | 1,2,6,7 | |
| A,P | DE-A-3 918 190 (DORNIER) <br> * Spalte 1, Zeilen 63-67; Spalte 2, Zeilen 51-55; Spalte 3, Zeilen 40-50 * <br> – – – | 1,2,6 | |
| A | DATABASE WPIL, Nr. 85-156253 [26], Derwent Publications Ltd, Londen, GB; & JP-A-60 087 857 & JP-A-63 045 617 (KANSAI NETSUKAGAKU) <br> – – – | 1,2,6 | |
| A | FR-A-2 306 735 (S.A.E.S. GETTERS S.p.A.) <br> * Anspruch 1 * <br> – – – | 1,2,6 | RECHERCHIERTE SACHGEBIETE (Int. Cl.5) |
| A | PATENT ABSTRACTS OF JAPAN, Band 9, Nr. 171 (C-291), 16. Juli 1985; & JP-A-60 044 020 (NIPPON GENSHIRYOKU KENKYUSHO) 08-03-1985 <br> – – – | 1,2,6 | C 02 F <br> C 23 F <br> G 21 C |
| A | DE-A-1 642 494 (MÄRKISCHE STEINKOHLENGEWERK-SCHAFT) <br> * Seite 1, letzter Absatz; Anspruch 1 * <br> – – – – – | 1,2,6 | |

Der vorliegende Recherchenbericht wurde für alle Patentansprüche erstellt

| Recherchenort | Abschlußdatum der Recherche | Prüfer |
|---|---|---|
| Den Haag | 19 April 91 | KASPERS H.M.C. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
-----------------------------------------------------------
& : Mitglied der gleichen Patentfamilie, übereinstimmendes Dokument